# EUROPEAN PATENT SPECIFICATION

(11) **EP 3 296 610 B1**
(45) Date of publication and mention of the grant of the patent: **03.04.2019**
(21) Application number: 16189554.5
(22) Date of filing: 20.09.2016
(51) Int. Cl.: F16M 11/32, F16M 11/36

(54) **ANCHORAGE TRIPOD FEET WEBBING**
VERANKERUNGSSTATIVFUSSBAND
SANGLE DE FIXATION DE PIEDS DE TRÉPIED

(43) Date of publication of application: 21.03.2018
(73) Proprietor: Honeywell International Inc., Morris Plains, NJ 07950 (US)
(72) Inventor: HROUZEK, Jan, Morris Plains, NJ 07950 (US); KLIMA, Jiri, Morris Plains, NJ 07950 (US); FAYE, Nicolas, Morris Plains, NJ 07950 (US)
(74) Representative: Houghton, Mark Phillip

(56) References cited:
- WO-A1-2010/130282
- JP-U- S55 158 394
- US-A1- 2011 147 558
- US-A1- 2011 215 206

## Description

### FIELD

This disclosure relates to anchorage systems for raising and lowering a worker to and from a worksite, and more particularly, to tripod devices that provide an anchor for raising and lowering a worker into and out of a manhole.

### BACKGROUND

Tripod devices that create an anchor for raising and lowering a worker into a manhole or other worksite are known. Such tripod devices conventionally have three legs, with a foot pivot mounted to each of the legs. To enhance the mechanical strength capability of such tripods, webbing or chain is often used to connect the tripod's three feet. To this end, in conventional tripods, openings are provided in the feet of the tripod with the webbing or chain being threaded through the openings along the length of the chain through all three of the feet of the tripod. This solution is not the most satisfying in that it takes time to thread the chain or webbing through the openings in each of the feet, and further time to remove the chain or webbing from the feet when the tripod is being moved from the worksite for storage or for placement at another worksite.

Patent document numbers WO2010/130282A1 describes a base for a transportable mast comprising a plurality of superimposed tubular mast elements. The base comprises a guide shaft with an opening for guiding the displacement of the tubular mast elements, legs connected to the guide shaft, for positioning the guide shaft at a distance above ground. Assembly of the mast is also described comprising the base, and a field base for limiting movement of the mast, and a guy control assembly for keeping the mast upright during erection or retraction of the mast.

Patent document number US2011/215206A1 describes a mount for mobile electronic devices such as a satellite dish antenna system. The mount includes a tripod and an elongated post member supported on it by a universal joint or pivot mechanism. The post member extends along a longitudinal axis and the pivot mechanism allows the post member to be moved about two perpendicular pivotal axes relative to the tripod to align the longitudinal axis of the post member with the vertical. Once the axis of the post member is aligned vertically, the alignment system of the attachable satellite dish will then have a proper reference from which to aim or direct the dish (e.g., azimuth and elevation) for best reception and transmission. The mount includes an arrangement of cables extending between the tripod legs and adjustable straps extending between each tripod leg and the post member to provide a very strong and stable support for the satellite dish antenna system that is attachable to the upper end of the vertically aligned post member. The tripod is designed to be foldable into a compact configuration for easy transport and storage with each tripod leg folded onto itself and positioned under a central member of the tripod. The folding and unfolding of the tripod and the alignment of the post member to the vertical on it can all be done by one person without the need for any tools.

Patent document number US2011/147558A1 describes an insulated foot pad for a tripod has an insulated block sandwiched between two plates. The plates are made of a material that is a poor conductor of heat. Tripod legs placed on the foot pads will not sink into the snow on sunny days nor into warm asphalt on hot days.

Patent document number JP-S55-158394U describes a camera tripod.

### SUMMARY

The present invention in its various aspects is as set out in the appended claims.

In accordance with one feature of this disclosure, a tripod system is disclosed for supporting the weight of a worker during entry to and exit from a worksite beneath the tripod system. The tripod system includes a central frame, three support legs extending from the central frame, each of the legs being pivot mounted to the central frame, and a foot attached to each leg. Each foot includes a rigid frame attached to the corresponding leg and a strap connector carried on the rigid frame. The strap connector has a strap insertion slot to allow a portion of a webbing strap to be inserted into the connector transverse to a longitudinal length of the webbing strap and a strap abutment surface against which the portion of the webbing strap abuts after the webbing strap is fully inserted into the connector and placed under a tension load.

As one feature, a webbing strap is inserted into the strap connector on each foot and extends between the feet.

In one feature, the strap connector on each foot further includes a strap retention surface extending between the strap insertion slot and the strap abutment surface to inhibit movement of the portion of the webbing from the strap abutment surface into the strap insertion slot.

According to the present invention, for each strap connector, at least a portion of the strap retention surface extends parallel to the strap abutment surface.

As one feature, at least a portion of the strap retention surface extends perpendicular to the strap abutment surface.

In one feature, each foot includes a bottommost surface to engage any surface surrounding a worksite, each bottommost surface defining a plane, and wherein the strap abutment surface of each strap connector extends perpendicular to the plane defined by the bottommost surface of the corresponding foot.

According to one feature, for each strap connector, the strap abutment surface has a longitudinal length L and the strap insertion slot has a gap opening size G, with L being at least 4 times greater than G.

As one feature, the strap connector and the rigid frame are formed from the same continuous piece of rigid material.

In one feature, each foot further includes an additional strap connector carried on the rigid frame. The additional strap connector has a strap insertion slot to allow a portion of a webbing strap to be inserted into the connector transverse to a longitudinal length of the webbing strap and a strap abutment surface against which the portion of the webbing strap abuts after the strap is fully inserted into the connector and placed under a tension load.

According to one feature, the strap connectors of each foot are spaced from each other on the rigid frame of the foot with the strap abutment surface of each strap connector extending parallel to the strap abutment surface of the other strap connector.

As one feature, each rigid frame includes a pair of spaced walls that extend parallel to each other with one of the strap connectors defined by one of the pair of spaced walls and the other of the strap connectors defined by the other of the pair of spaced walls.

In one feature, a foot is provided for a tripod system for supporting the weight of a worker during entry to and exit from a worksite beneath the tripod system. The tripod system includes a central frame and three support legs extending from the central frame. Each of the legs is pivot mounted to the central frame. The foot is attachable to each of the legs and includes a rigid frame attached to the corresponding leg, and a strap connector carried on the rigid frame and having a strap insertion slot to allow a portion of a webbing strap to be inserted into the connector transverse to a longitudinal length of the webbing strap and a strap abutment surface against which the portion of the webbing strap abuts after the webbing strap is fully inserted into the connector and placed under a tension load.

According to one feature, the strap connector further includes a strap retention surface extending between the strap insertion slot and the strap abutment surface to inhibit movement of the portion of the webbing from the strap abutment surface into the strap insertion slot.

As one feature, at least a portion of the strap retention surface extends parallel to the strap abutment surface.

In one feature, at least a portion of the strap retention surface extends perpendicular to the strap abutment surface.

According to one feature, the foot includes a bottommost surface to engage any surface surrounding a worksite. The bottommost surface defines a plane, and wherein the strap abutment surface of the strap connector extends perpendicular to the plane defined by the bottommost surface of the foot.

As one feature, the strap abutment surface has a longitudinal length L and the strap insertion slot has a gap opening size G, with L being at least 4 times greater than G.

In one feature, the strap connector and the rigid frame are formed from the same continuous piece of rigid material.

According to one feature, the foot further includes an additional strap connector carried on the rigid frame. The additional strap connector has a strap insertion slot to allow a portion of a webbing strap to be inserted into the connector transverse to a longitudinal length of the webbing strap and a strap abutment surface against which the portion of the webbing strap abuts after the webbing strap is fully inserted into the connector and placed under a tension load.

As one feature, the strap connectors are spaced from each other on the rigid frame with the strap abutment surface of each strap connector extending parallel to the strap abutment surface of the other strap connector.

In one feature, the rigid frame includes a pair of spaced walls that extend parallel to each other with one of the strap connectors defined by one of the pair of spaced walls and the other of the strap connectors defined by the other of the pair of spaced walls.

According to one feature, a foot is provided for a tripod system for supporting the weight of a worker during entry to and exit from a worksite beneath the tripod system. The tripod system includes a central frame and three support legs extend from the central frame, each of the legs being pivot mounted to the central frame. The foot is attachable to each of the legs and includes a rigid frame attached to the corresponding leg and a hook-shaped strap connector carried on the rigid frame to allow a portion of a webbing strap to be inserted into the connector transverse to a longitudinal length of the webbing strap.

As one feature, he hook-shaped strap connector and the rigid frame are formed from the same continuous piece of rigid material.

In one feature, the foot further includes an additional hook-shaped strap connector carried on the rigid frame to allow a portion of a webbing strap to be inserted into the additional hook-shaped connector transverse to a longitudinal length of the webbing strap.

According to one feature, the hook-shaped strap connectors extend parallel to each other and are spaced from each other on the rigid frame.

As one feature, the rigid frame includes a pair of spaced walls that extend parallel to each other with one of the hook-shaped strap connectors defined by one of the pair of spaced walls and the other of the hook-shaped strap connectors defined by the other of the pair of spaced walls.

In one feature, a tripod system is provided for supporting the weight of a worker during entry to and exit from a worksite beneath the tripod system. The tripod system includes a central frame and three support legs extending from the central frame. Each of the legs is pivot mounted to the central frame, a foot according to any of paragraphs ([0024] - [0029] being attached to each of the legs.

It should be understood that this disclosure contemplates a tripod foot and a tripod system including any combination of the above-mentioned features.

Other features and advantages will become apparent from a review of the entire specification, including the appended claims and drawings.

### BRIEF DESCRIPTION OF THE DRAWINGS

Fig. 1 is an isometric view of a tripod system having feet with easy install/removal web receiving openings according to this disclosure;
Fig. 2 is an enlarged cross section view of one of the feet of Fig. 1;
Fig. 3 is an enlarged isometric view showing a looped end of a webbing strap connected to one of the feet of the tripod system of Fig. 1;
Fig. 4 is a view similar to Fig. 3 showing the webbing strap being inserted into one of the feet of Fig. 1;
Fig. 5 is a view similar to Fig. 4 showing the strap further inserted into the foot;
Fig. 6 is a view similar to Figs. 4 and 5 showing the fully inserted strap in a ready to use condition;
Fig. 7 is a view showing an opposite looped end of the strap attached to the foot of Fig. 3; and
Fig. 8 is a view showing a strap tightening mechanism for the strap shown in Figs. 1-7.

### DETAILED DESCRIPTION

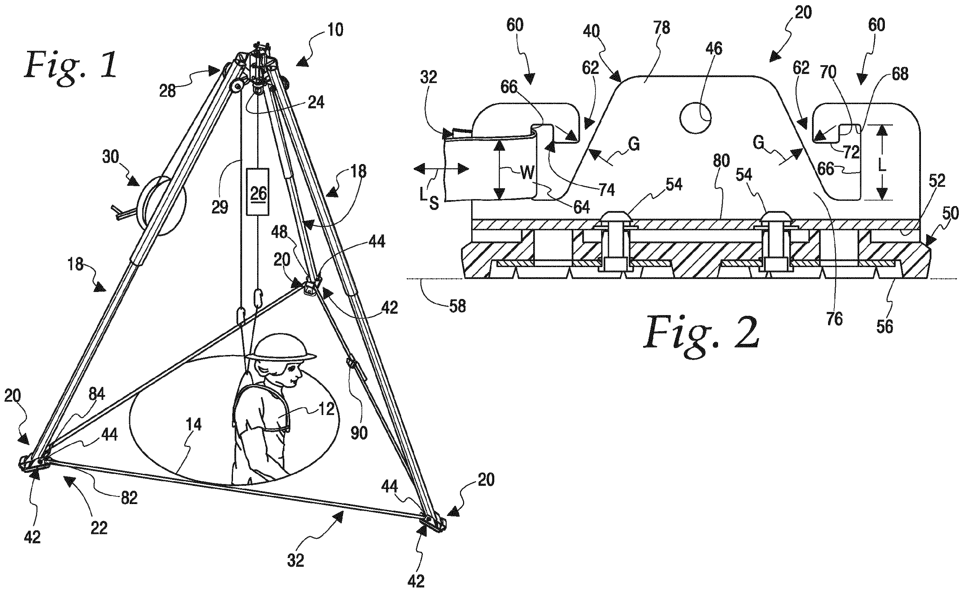

With reference to Fig. 1, a tripod system 10 is shown for supporting the weight of a worker 12 during entry and exit from a worksite 14 (typically a manhole) located beneath the tripod system 10. The tripod system 10 includes a central frame 16, three support legs 18 extending from the frame 16, with each of the legs 18 being pivot mounted to the frame 16, and a foot 20 attached to each leg 18 to support the tripod system 10 on the surface 22 adjacent the worksite 14. In the illustrated embodiment, each of the legs 18 is a telescoping leg 18. It should be understood that the telescoping features of each of the legs 18 is a strictly optional feature.

The tripod system 10 further includes a first anchorage component 24 in the form of a weight bearing D-ring or the like for providing an anchor point to a fall protection device 26, such as a self-retracting lifeline or shock absorbing lanyard, that extends from the anchorage component 24 to the worker 12. In the illustrated embodiment, the system 10 further includes an additional anchorage component 28 in the form of a pulley that directs a weight bearing cable or line 29 from a winch 30 to the worker 12 for raising and lowering the worker 12 in and out of a worksite.

The tripod system 10 further includes a webbing strap 32 that extends between and connects each of the feet 20 to enhance the mechanical strength capability of the tripod system 10 by reacting any forces that would tend to move the feet 20 further away from each other and/or further pivot the legs 18 relative to the frame 16. The strap 32 can be made from any suitable webbing material that provides a suitably high strength, many of which are known.

Further details of the tripod components 16, 18, 24, 28 and 30 are not critical to an understanding of the tripod foot 20 disclosed herein. Furthermore, although a specific form of each of the tripod components 16, 18, 24, 28, 30 and 32 is shown, it should be understood that many suitable forms for each of these components are known and may be desirable depending upon the particular application for the tripod system 10. Accordingly, no limitations to specific geometries or forms for these components is intended unless expressly recited in the appended claims.

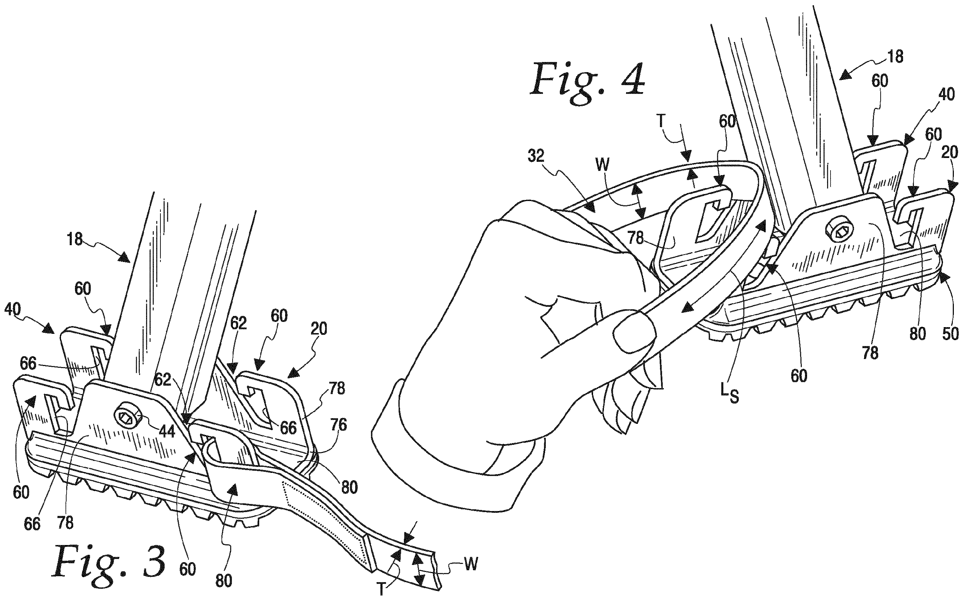

Each foot 20 includes a rigid frame 40 that is attached to the corresponding leg 18 via a pivot connection 42, which in the illustrated embodiment is a shouldered, threaded fastener 44 (best seen in Figs. 3-7) that is received in corresponding openings or bores (not shown) in each of the legs 18 and a pair of holes 46 (only one shown in Fig. 2) in each of the frames 40, and is secured by a mating lock nut 48 engaged against an opposite side of the frame 40. It should be appreciated that while a specific type of pivot connection 42 is described and illustrated herein, any suitable pivot connection can be utilized according to this disclosure. Accordingly, no limitation to the specific type or form of pivot connection is intended unless expressly recited in one of the appended claims.

In the illustrated embodiment and as best seen in Fig. 2, each foot further includes a replaceable sole 50 that is attached to a bottom facing surface 52 of the frame 40 by a pair of releasable fasteners 54 (only one shown in the figures), which in the illustrated embodiment are shown in the form of threaded fasteners 54. The foot 20 includes a bottommost surface 56 on the sole 50 that engages the surface 22 surrounding the manhole 14 and that defines a plane 58. It should be understood that while the replaceable sole 50 will be desirable in many applications, in some applications it may be desirable to provide a different type of sole 50, including a sole that is not replaceable, or to simply forego any type of sole 50 for each of the feet 20. Accordingly, no limitation to the illustrated sole 50 is intended unless expressly recited in one of the appended claims.

Each foot 20 further includes at least one strap connector 60 carried on the frame 40, and in the illustrated embodiment, each foot 20 includes four strap connectors 60 carried on the frame 40 as an integral part of the frame 40. It should be appreciated that while the illustrated embodiment shows the strap connectors 60 as being an integral part of the frame 40, with the frame 40 being a one-piece design, in some applications is may be desirable for each of the strap connectors 60 to be a separate component that is either removably fixed to the frame 40 or permanently attached to the frame 40 such as by a fabrication technique such as bonding or welding. With reference to Fig. 2, each of the strap connectors 60 in the illustrated embodiment is a hook-shaped strap connector 60 and includes a strap insertion slot 62 to allow a portion 64 of the webbing strap 32 to be inserted into the connector 60 in the width direction W of the webbing strap 32, transverse to the longitudinal length Ls of the webbing strap 32, and further includes a strap abutment surface 66 against which the portion 64 of the webbing strap 32 abuts after the strap 56 is fully inserted into the connector 60 and placed under tension load. In the illustrated embodiment, the strap abutment surface 66 extends vertically, perpendicular (transverse) to the plane 58 defined by the bottommost surface 56 of the foot 20. The strap abutment surface 66 has a longitudinal length L and the strap insertion slot has a gap opening size G. The longitudinal length L of the strap abutment surface 66 will desirably be sized to accommodate the transverse width W of any webbing strap 32 intended for use in with the system 10, and the gap opening size G will be sized to allow to be slightly larger than the thickness T of any webbing strap 32 intended for use with the system 10. In the illustrated embodiment, L is at least four times greater than G.

Each of the connectors 60 further includes a series of strap retention surfaces 68, 70 and 72 extending between the strap insertion slot 62 and the strap abutment surface 66 to inhibit movement of the portion 64 of the webbing strap 32 from the strap abutment surface 66 into the strap insertion slot 62 after the portion 64 is fully inserted into the connector in a ready to load condition, as seen in Fig. 2. In the illustrated embodiment, the strap retention surface 68 extends horizontally from the strap abutment surface 66, transverse to the strap abutment surface 66 and inhibits upward movement of the portion 64 of the webbing strap 32 from its "fully inserted" position against the strap abutment surface 66. The strap retention surface 70 extends downward from the strap retention surface 68 parallel to the strap abutment surface 66 and inhibits movement of the strap portion 64 of the webbing strap 32 away from the strap abutment surface 66. The strap abutment surface 72 extends horizontally from the strap abutment surface 70 to the strap insertion slot 62, transverse to the strap abutment surface 66 to inhibit both upward movement of the strap portion 64 out of engagement with the strap abutment surface 66 and movement of the portion 64 away from the strap abutment surface 66. It should be appreciated that the strap retention surfaces 68, 70 and 72 are each a portion of a continuous strap retention surface 74 that extends from the strap abutment surface 66 to the insertion slot 62. It should also be understood that while specific orientations and geometries are shown for the surfaces 68, 70 and 72, other orientations and geometries are possible, including a curved retention surface 74 or surfaces 68, 70 and/or 72 that are at a diagonal relative to the strap abutment surface 66. Accordingly, no limitation to the specific form and geometries of the strap retention surface 74 are intended unless expressly recited in one of the appended claims.

As best seen in Fig. 3, in the illustrated embodiments, the strap connectors 60 and the frame 40 are formed from the same continuous piece of rigid material 76, with the strap connectors 60 of each foot 20 being spaced from each other on the frame 40 and the strap abutment surfaces 66 of each strap connector 60 extending parallel to the strap abutment surface 66 of the other strap connectors 60 on the frame 40. Further in this regard, each frame 40 comprises a pair of spaced walls 78 that extend vertically parallel to each other from a base wall 80, with a pair of the strap connectors 60 defined by each of the spaced walls 78 and being spaced opposite from the strap connectors 60 on the opposite wall 78. By supplying the strap connector 60 at each end of the frame 40 of the foot 20, the foot 20 can be mounted to the corresponding leg 18 with either end of the foot pointing "inwardly" in order to connect the webbing strap 32 thereto, thereby simplifying the assembly of the tripod system 10. While this feature is desirably in many applications, it should be understood that this disclosure contemplates a frame 40 with only two of the connectors 60 provided on a single end of the foot 20, or even a frame 40 having a single connector 60.

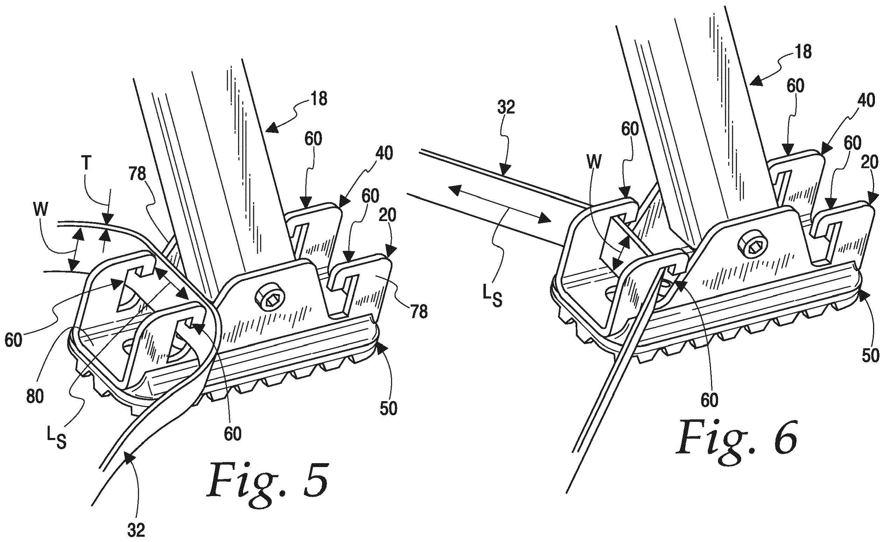

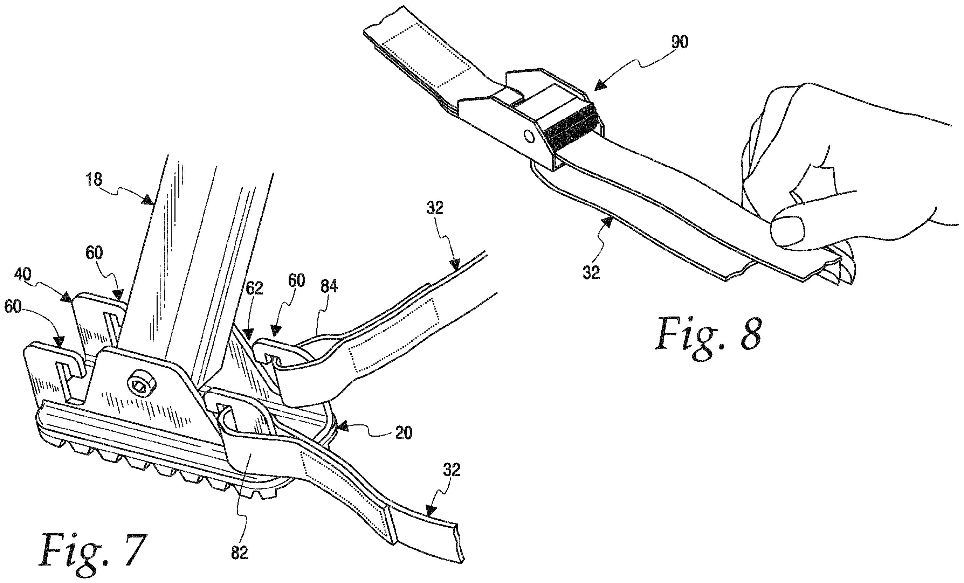

As best seen in Figs. 4 and 5, the strap connectors 60 allow for the portion 64 of the webbing strap 32 to be inserted along the width W, transverse to the longitudinal length Ls of the webbing strap 32 which is an improvement over conventional tripod systems that require for a webbing strap or chain to be threaded through an opening along the longitudinal length of the webbing strap or chain. It should be obvious to any person skilled in the art that it is far quicker to insert the webbing strap 32 as shown in Figs. 4 and 5 in comparison to the conventional method of threading the webbing strap along the longitudinal length Ls of the webbing strap through a connector hole or holes in each foot of the tripod system. Furthermore, as shown in Figs. 3 and 7, the connectors 60 allow for a webbing strap that has fixed loops 82 and 84 to again be inserted along the width W, transverse to the longitudinal length Ls of the strap and to be secured to one of the feet 20. This again greatly reduces the amount of time required to provide the system 10 with the webbing strap 32 in comparison to currently commercially available feet and allows for a webbing strap 32 that does not have to have its ends "reconnected" after the webbing strap is attached to the feet of the tripod system 10 via threading the webbing strap through connector holes in the feet. With respect to some embodiments, it should further be understood that by providing a pair of spaced connectors 60 that accept the strap 32 for each foot 20, the load on each connector 60 is reduced in comparison to a single opening connector that would receive the web strapping, and furthermore than the angle of intersection of the webbing strap 32 with the connector 60 is approximately half of what would be provided with a single opening or connector. Last, as best seen in Fig. 8, the webbing strap 32 can be provided with an adjustable connector/buckle 90 of any suitable type, many of which are known, that allows the total length of the strap 32 to be adjusted to fit the spacing of the legs 18 and feet 20 for each particular worksite 14 so that the webbing strap 32 can be taut during use.

It should be appreciated that while a specific embodiment of the foot 20 has been illustrated and described herein, this disclosure contemplates other geometries, shapes and forms for the foot 20 and its components. Accordingly, no limitations to specific forms, shapes, geometries, etc. is intended unless expressly recited in one of the appended claims.

The subject matter of this disclosure can be, without limitation, described as shown in the following numbered features. It should be understood that the below listed features are not the only possible descriptions of the disclosed subject matter.

### Features:

1. A tripod system (10) for supporting the weight of a worker (12) during entry to and exit from a worksite (14) beneath the tripod system (10), the tripod system (10) comprising:
   a central frame (16);
   three support legs (18) extending from the central frame (16), each of the legs (18) being pivot mounted to the central frame (16); and
   a foot (20) attached to each leg, each foot (20) comprising:
      a rigid frame (40) attached to the corresponding leg (18); and
      a strap connector (60) carried on the rigid frame (40) and having a strap insertion slot (62) to allow a portion (64) of a webbing strap (32) to be inserted into the connector transverse to a longitudinal length Ls of the webbing strap (32) and a strap abutment surface (66) against which the portion (64) of the webbing strap (32) abuts after the webbing strap (32) is fully inserted into the connector (60) and placed under a tension load.
2. The tripod system (10) of feature 1 further comprising a webbing strap (32) inserted into the strap connector (60) on each foot (20) and extending between the feet (20).
3. The tripod system (10) of any preceding feature wherein each strap connector (60) further comprises a strap retention surface (68, 70 or 72) extending between the strap insertion slot (62) and the strap abutment surface (66) to inhibit movement of the portion (64) of the webbing from the strap abutment surface (66) into the strap insertion slot (62).
4. The tripod system (10) of feature 3 wherein at least a portion (64) of the strap retention surface (68, 70 or 72) extends parallel to the strap abutment surface (66).
5. The tripod system (10) of features 3 or 4 wherein at least a portion (64) of the strap retention surface (68, 70 or 72) extends perpendicular to the strap abutment surface (66).
6. The tripod system (10) of any preceding feature wherein each foot (20) comprises a bottommost surface (56) to engage any surface (22) surrounding a worksite (14), each bottommost surface (56) defining a plane (58), and wherein the strap abutment surface (66) of each strap connector (60) extends perpendicular to the plane (58) defined by the bottommost surface (56) of the corresponding foot (20).
7. The tripod system (10) of any preceding feature wherein for each foot (20), the strap abutment surface (66) has a longitudinal length L and the strap insertion slot (62) has a gap opening size G, with L being at least 4 times greater than G.
8. The tripod system (10) of any preceding feature wherein the strap connector (60) and the rigid frame (40) of each foot (20) are formed from the same continuous piece (76) of rigid material.
9. The tripod system (10) of any preceding feature wherein each foot (20) further comprises an additional strap connector (60) carried on the rigid frame (40), the additional strap connector (60) having a strap insertion slot (62) to allow a portion (64) of a webbing strap (32) to be inserted into the connector (60) transverse to a longitudinal length Ls of the webbing strap (32) and a strap abutment surface (66) against which the portion (64) of the webbing strap (32) abuts after the webbing strap (32) is fully inserted into the connector (60) and placed under a tension load.
10. The tripod system (10) of feature 9 wherein the strap connectors (60) of each foot (20) are spaced from each other on the rigid frame (40) of the foot (20) with the strap abutment surface (66) of each strap connector (60) extending parallel to the strap abutment surface (66) of the other strap connector (60).
11. The tripod system (10) of feature 9 wherein each rigid frame (40) comprises a pair of spaced walls (78) that extend parallel to each other with one of the strap connectors (60) defined by one of the pair of spaced walls (78) and the other of the strap connectors (60) defined by the other of the pair of spaced walls (78).
12. A foot (20) for a tripod system (10) for supporting the weight of a worker (12) during entry to and exit from a worksite (14) beneath the tripod system (10), the tripod system (10) including a central frame (16) and three support legs (18) extending from the central frame (16), each of the legs (18) being pivot mounted to the central frame (16);
   the foot (20) being attachable to each of the legs (18) and comprising:
   a rigid frame (40) attached to the corresponding leg; and
   a strap connector (60) carried on the rigid frame (40) and having a strap insertion slot (62) to allow a portion (64) of a webbing strap (32) to be inserted into the connector (60) transverse to a longitudinal length of the webbing strap (32) and a strap abutment surface (66) against which the portion (64) of the webbing strap (32) abuts after the webbing strap (32) is fully inserted into the connector (60) and placed under a tension load.
13. The foot (20) of feature 12 wherein the strap connector (60) further comprises a strap retention surface (68, 70 or 72) extending between the strap insertion slot (62) and the strap abutment surface (66) to inhibit movement of the portion (64) of the webbing from the strap abutment surface (66) into the strap insertion slot (62).
14. The foot (20) of feature 13 wherein at least a portion (64) of the strap retention surface (68, 70 or 72) extends parallel to the strap abutment surface (66).
15. The foot (20) of features 13 or 14 wherein at least a portion (64) of the strap retention surface (68, 70 or 72) extends perpendicular to the strap abutment surface (66).
16. The foot (20) of any of features 12-15 wherein the foot (20) comprises a bottommost surface (56) to engage any surface (22) surrounding a worksite (14), the bottommost surface (56) defining a plane (58), and wherein the strap abutment surface (66) of the strap connector (60) extends perpendicular to the plane (58) defined by the bottommost surface (56) of the foot (20).
17. The foot (20) of any of features 12-16 wherein the strap abutment surface (66) has a longitudinal length L and the strap insertion slot (62) has a gap opening size G, with L being at least 4 times greater than G.
18. The foot (20) of any of features 12-17 wherein the strap connector (60) and the rigid frame (40) are formed from the same continuous piece (76) of rigid material.
19. The foot (20) of any of features 12-18 wherein the foot (20) further comprises an additional strap connector (60) carried on the rigid frame (40), the additional strap connector (60) having a strap insertion slot (62) to allow a portion (64) of a webbing strap (32) to be inserted into the connector (60) transverse to a longitudinal length of the webbing strap (32) and a strap abutment surface (66) against which the portion (64) of the webbing strap (32) abuts after the webbing strap (32) is fully inserted into the connector (60) and placed under a tension load.
20. The foot (20) of feature 19 wherein the strap connectors (60) are spaced from each other on the rigid frame (40) with the strap abutment surface (66) of each strap connector (60) extending parallel to the strap abutment surface (66) of the other strap connector (60).
21. The foot (20) of feature 19 wherein the rigid frame (40) comprises a pair of spaced walls (78) that extend parallel to each other with one of the strap connectors (60) defined by one of the pair of spaced walls (78) and the other of the strap connectors (60) defined by the other of the pair of spaced walls (78).
22. A foot (20) for a tripod system (10) for supporting the weight of a worker (12) during entry to and exit from a worksite (14) beneath the tripod system (10), the tripod system (10) including a central frame (16) and three support legs (18) extending from the central frame (16), each of the legs (18) being pivot mounted to the central frame (16);
   the foot (20) being attachable to each of the legs (18) and comprising:
   a rigid frame (40) attachable to the corresponding leg; and
   a hook-shaped strap connector (60) carried on the rigid frame (40) to allow a portion (64) of a webbing strap (32) to be inserted into the connector (60) transverse to a longitudinal length of the webbing strap (32).
23. The foot (20) of feature 22 wherein the hook-shaped strap connector (60) and the rigid frame (40) are formed from the same continuous piece (76) of rigid material.
24. The foot (20) of feature 22 or 23 wherein the foot (20) further comprises an additional hook-shaped strap connector (60) carried on the rigid frame (40) to allow a portion (64) of a webbing strap (32) to be inserted into the additional hook-shaped connector (60) transverse to a longitudinal length of the webbing strap (32).
25. The foot (20) of feature 24 wherein the hook-shaped strap connectors (60) extend parallel to each other and are spaced from each other on the frame (40).
26. The foot (20) of feature 24 wherein the frame (40) comprises a pair of spaced walls (78) that extend parallel to each other with one of the hook-shaped strap connectors (60) defined by one of the pair of spaced walls (78) and the other of the hook-shaped strap connectors (60) defined by the other of the pair of spaced walls (78).
27. A tripod system (10) for supporting the weight of a worker (12) during entry to and exit from a worksite (14) beneath the tripod system (10), the tripod system (10) including a central frame (16) and three support legs (18) extending from the central frame (16), each of the legs (18) being pivot mounted to the central frame (16); and a foot (20) according to any of features 12-26 being attached to each of the legs (18).

## Claims

1. A tripod system (10) for supporting the weight of a worker (12) during entry to and exit from a worksite (14) beneath the tripod system (10), the tripod system (10) comprising:
a central frame (16);
three support legs (18) extending from the central frame (16), each of the legs (18) being pivot mounted to the central frame (16); and
a foot (20) attached to each leg, each foot (20) comprising:
a rigid frame (40) attached to the corresponding leg (18); and
a strap connector (60) carried on the rigid frame (40) and having a strap insertion slot (62), a strap abutment surface (66),_and a strap retention surface (68, 70 or 72) extending between the strap insertion slot (62) and the strap abutment surface (66) to inhibit, in use, movement of the portion (64) of the webbing from the strap abutment surface (66) into the strap insertion slot (62), the strap connector (60), **characterized in that** the rigid frame (40) of each foot (20) being formed from the same continuous piece (76) of rigid material, wherein at least a portion (64) of the strap retention surface (68, 70, 72) extends parallel to the strap abutment surface (66).

2. The tripod system (10) of claims 1 or 2 wherein at least a portion (64) of the strap retention surface (68, 70 or 72) extends perpendicular to the strap abutment surface (66).

3. The tripod system (10) of any preceding claim wherein each foot (20) further comprises an additional strap connector (60) carried on the rigid frame (40), the additional strap connector (60) having a strap insertion slot (62) and a strap abutment surface (66); and
wherein the strap connectors (60) of each foot (20) are spaced from each other on the rigid frame (40) of the foot (20) with the strap abutment surface (66) of each strap connector (60) extending parallel to the strap abutment surface (66) of the other strap connector (60).

4. The tripod system (10) of any preceding claim wherein the strap abutment surface (66) has a longitudinal length L and the strap insertion slot (62) has a gap opening size G, with L being at least 4 times greater than G.

5. The tripod system (10) of claim 1 further comprising a webbing strap (32) that can be inserted into each of the connectors (60) transverse to a longitudinal length Ls of the webbing strap (32) so that portions (64) of the webbing strap (32) abut the strap abutments surfaces (66) after the webbing strap (32) is fully inserted into the connectors (60) and placed under a tension load.

## Patentansprüche

1. Stativsystem (10) zum Halten des Gewichts eines Arbeiters (12) beim Betreten oder Verlassen eines Arbeitsplatzes (14) unter dem Stativsystem (10), wobei das Stativsystem (10) Folgendes umfasst:
einen zentralen Rahmen (16),
drei Stützbeine (18), die sich von dem zentralen Rahmen (16) erstrecken, wobei die Beine (18) jeweils drehbar an dem zentralen Rahmen (16) gelagert sind, und
einen Fuß (20), der an jedem Bein angebracht ist, wobei jeder Fuß (20) Folgendes umfasst:
einen starren Rahmen (40), der an dem entsprechenden Bein (18) angebracht ist, und
einen Gurtverbinder (60), der an dem starren Rahmen (40) getragen ist und einen Gurteinschubschlitz (62), eine Gurtanlagefläche (66) und eine Gurthaltefläche (68, 70 oder 72) aufweist, die sich zwischen dem Gurteinschubschlitz (62) und der Gurtanlagefläche (66) erstreckt, um im Gebrauch eine Bewegung des Abschnitts (64) des Bands von der Gurtanlagefläche (66) in den Gurteinschubschlitz (62) zu verhindern, wobei der Gurtverbinder (60) **dadurch gekennzeichnet ist, dass** der starre Rahmen (40) jedes Fußes (20) aus dem gleichen Endlosstück (76) starren Materials gebildet ist, wobei sich wenigstens ein Abschnitt (64) der Gurthaltefläche (68, 70, 72) parallel zu der Gurtanlagefläche (66) erstreckt.

2. Stativsystem (10) nach Anspruch 1 oder 2, wobei sich wenigstens ein Abschnitt (64) der Gurthaltefläche (68, 70 oder 72) senkrecht zu der Gurtanlagefläche (66) erstreckt.

3. Stativsystem (10) nach einem der vorhergehenden Ansprüche, wobei jeder Fuß (20) ferner einen weiteren an dem starren Rahmen (40) getragenen Gurtverbinder (60) umfasst, wobei der weitere Gurtverbinder (60) einen Gurteinschubschlitz (62) und eine Gurtanlagefläche (66) aufweist, und
wobei die Gurtverbinder (60) jedes Fußes (20) an dem starren Rahmen (40) des Fußes (20) voneinander beabstandet sind, wobei sich die Gurtanlagefläche (66) jedes Gurtverbinders (60) parallel zu der Gurtanlagefläche (66) des weiteren Gurtverbinders (60) erstreckt.

4. Stativsystem (10) nach einem der vorhergehenden Ansprüche, wobei die Gurtanlagefläche (66) eine längserstreckte Länge L aufweist und der Gurteinschubschlitz (62) eine Spaltöffnungsgröße G aufweist, wobei L wenigstens 4 Mal so groß wie G ist.

5. Stativsystem (10) nach Anspruch 1, ferner umfassend ein Gurtband (32), das quer zu einer längserstreckten Länge L des Gurtbands (32) in jeden der Verbinder (60) eingeschoben werden kann, so dass Abschnitte (64) des Gurtbands (32) an den Gurtanlageflächen (66) anliegen, nachdem das Gurtband (32) vollständig in die Verbinder (60) eingeschoben und unter Zugkraft gesetzt worden ist.

## Revendications

1. Système de trépied (10) pour supporter le poids d'un travailleur (12) pendant l'entrée dans et la sortie d'un site de travail (14) en dessous du système de trépied (10), le système de trépied (10) comprenant:
un cadre central (16);
trois jambes de support (18) qui s'étendent à partir du cadre central (16), chacune des jambes (18) étant montée de façon pivotante sur le cadre central (16); et
un pied (20) attaché à chaque jambe, chaque pied (20) comprenant:
un cadre rigide (40) attaché à la jambe correspondante (18); et
un connecteur de sangle (60) porté sur le cadre rigide (40) et présentant une fente d'insertion de sangle (62), une surface de butée de sangle (66) et une surface de retenue de sangle (68, 70 ou 72) qui s'étend entre la fente d'insertion de fente (62) et la surface de butée de sangle (66) afin d'empêcher, lors de l'utilisation, le déplacement de la partie (64) de la sangle à partir de la surface de butée de sangle (66) dans la fente d'insertion de sangle (62), le connecteur de sangle (60) étant **caractérisé en ce que** le cadre rigide (40) de chaque pied (20) est formé à partir de la même pièce continue (76) de matériau rigide, dans lequel au moins une partie (64) de la surface de retenue de sangle (68, 70, 72) s'étend parallèlement à la surface de butée de sangle (66).

2. Système de trépied (10) selon la revendication 1, dans lequel au moins une partie (64) de la surface de retenue de sangle (68, 70 ou 72) s'étend parallèlement à la surface de butée de sangle (66).

3. Système de trépied (10) selon l'une quelconque des revendications précédentes, dans lequel chaque pied (20) comprend en outre un connecteur de sangle supplémentaire (60) qui est porté sur le cadre rigide (40), le connecteur de sangle supplémentaire (60) présentant une fente d'insertion de sangle (62) et une surface de butée de sangle (66); et
dans lequel les connecteurs de sangle (60) de chaque pied (20) sont espacés les uns des autres sur le cadre rigide (40) du pied (20) avec la surface de butée de sangle (66) de chaque connecteur de sangle (60) qui s'étend parallèlement à la surface de butée de sangle (66) de l'autre connecteur de sangle (60).

4. Système de trépied (10) selon l'une quelconque des revendications précédentes, dans lequel la surface de butée de sangle (66) présente une longueur longitudinale L et la fente d'insertion de sangle (62) présente une taille d'ouverture d'espace G, dans lequel L est au moins quatre fois plus grand que G.

5. Système de trépied (10) selon la revendication 1, comprenant en outre une bande de sangle (32) qui peut être insérée dans chacun des connecteurs (60) transversalement à une longueur longitudinale Ls de la bande de sangle (32), de telle sorte que des parties (64) de la bande de sangle (32) butent contre les surfaces de butée de sangle (66) après que la bande de sangle (32) ait été entièrement insérée dans les connecteurs (60) et placée sous une charge de tension.
